# EUROPÄISCHE PATENTSCHRIFT

(11) **EP 4 494 840 B1**
(45) Veröffentlichungstag und Bekanntmachung des Hinweises auf die Patenterteilung: **02.12.2026**
(21) Anmeldenummer: 24188869.2
(22) Anmeldetag: 16.07.2024
(51) Int. Cl.: B29C 49/64, B29C 49/78, B29C 49/02, B29C 49/06, B29K 67/00, B29L 31/00

(54) **BEHÄLTERBEHANDLUNGSANLAGE ZUM REGELN EINER TEMPERATUR EINES VORFORMLINGS**
CONTAINER TREATMENT SYSTEM FOR CONTROLLING THE TEMPERATURE OF A PREFORM
INSTALLATION DE TRAITEMENT DE RÉCIPIENTS POUR RÉGULER LA TEMPÉRATURE D'UNE PRÉFORME

(30) Priorität: 19.07.2023 DE 102023119045
(43) Veröffentlichungstag der Anmeldung: 22.01.2025
(73) Patentinhaber: Krones AG, 93073 Neutraubling (DE)
(72) Erfinder: Geltinger, Florian, 93073 Neutraubling (DE); Meyer, Andreas, 93073 Neutraubling (DE); Hirdina, Jochen, 93073 Neutraubling (DE)
(74) Vertreter: Grünecker Patent- und Rechtsanwälte PartG mbB

(56) Entgegenhaltungen:
- DE-A1- 102010 029 644
- US-A1- 2019 152 121
- US-A1- 2021 170 665
- US-A1- 2021 339 452
- US-A1- 2022 063 173

## Beschreibung

Die vorliegende Erfindung betrifft eine Behälterbehandlungsanlage zum Regeln einer Temperatur eines Vorformlings gemäß unabhängigem Anspruch 1 und ein entsprechendes Verfahren gemäß unabhängigem Anspruch 7.

### Stand der Technik

Das Ausformen von Behältern aus Vorformlingen unter Verwendung eines Blasformverfahrens ist aus dem Stand der Technik bekannt. Zur Herstellung der Vorformlinge wird typischerweise ein Spritzgussverfahren eingesetzt.

Im Stand der Technik findet die Herstellung der Vorformlinge und das Ausformen der Vorformlinge zu einem Behälter zeitlich und örtlich getrennt voneinander statt.

So umfassen Behälterbehandlungsanlagen aus dem Stand der Technik neben einer Blasformmaschine typischerweise eine Speichervorrichtung, in welcher die bereits fertig hergestellten Vorformlinge als Schüttgut gelagert werden. Über die Speichervorrichtung kann die Blasformmaschine kontinuierlich mit Vorformlingen versorgt werden, so dass eine kontinuierliche Herstellung von Behältern gewährleistet werden kann. Um die Vorformlinge der Blasformmaschine aus dem Speicher geordnet zuführen zu können, werden diese zunächst mittels einer Sortiervorrichtung vereinzelt und/oder ausgerichtet. Nachdem die Vorformlinge zu Behältern ausgeformt wurden, können in nachgeordneten Prozessschritten weitere Behandlungsschritte an den Behältern, wie beispielweise ein Beschichten, ein Befüllen, ein Etikettieren, ein Bedrucken und/oder ein Verschließen vorgesehen sein.

Die aus dem Stand der Technik bekannte zeitlich und örtlich getrennte Herstellung der Vorformlinge und deren Weiterverarbeitung zu Behältern bringt jedoch eine Reihe von Nachteilen mit sich. So können die Vorformlinge beispielsweise durch den Transport zu der Behälterbehandlungsanlage oder durch die Lagerung als Schüttgut in der Speichervorrichtung der Behälterbehandlungsanlage beschädigt werden, was wiederum negative Auswirkungen auf die Qualität der aus den Vorformlingen hergestellten Behälter mit sich bringen kann. Zudem kann der Transport beziehungsweise die Lagerung der Vorformlinge mit hohen Kosten verbunden sein und ungewünschte Verunreinigungen an den Vorformlingen hervorrufen.

Die DE 10 2010 029 644 A1 offenbart eine Vorrichtung zum Herstellen von Kunststoffbehältern, umfassend eine getaktete Vorformlingsherstellungseinrichtung, eine Temperiereinrichtung zum thermischen Konditionieren von in der Vorformlingsherstellungseinrichtung hergestellten Vorformlingen und eine kontinuierliche arbeitende Glasmaschine, wobei die Temperiereinrichtung derart ausgebildet und/oder konfiguriert ist, dass Vorformlinge, die in einem Takt der Vorformlingsherstellungseinrichtung hergestellt wurden, verschieden temperiert werden können.

Die US 2021/170665 A1 betrifft ein Verfahren zum Bearbeiten von Kunststoffvorformlingen und/oder Kunststoffbehältnissen mittels zumindest einer ersten Bearbeitungsvorrichtung, welche die Kunststoffbehältnisse in einer ersten vorgegebenen Weise bearbeitet, und mittels zumindest einer zweiten Bearbeitungsvorrichtung, welche die Kunststoffbehältnisse in einer zweiten vorgegebenen Weise bearbeitet und welche vor oder nach der ersten Bearbeitungsvorrichtung angeordnet ist, wobei die Kunststoffbehältnisse mittels einer Transportvorrichtung von einer Bearbeitungsvorrichtung zu der anderen Bearbeitungsvorrichtung transportiert werden und die zumindest erste Bearbeitungsvorrichtung und die zumindest zweite Bearbeitungsvorrichtung miteinander gekoppelt sind, die erste Bearbeitungsvorrichtung eine Blasmaschine zum Umformen von Kunststoffvorformlingen zu Kunststoffbehältnissen ist, und die Prozessgeschwindigkeit der Blasmaschine mittels einer Vorgabe definiert wird, welche eine Mehrzahl von für den Umformungsprozess charakteristischen Prozessparametern enthält.

Die US 2022/063173 A1 offenbart ein Verfahren zum Betrieb einer Vorrichtung zur Herstellung von Kunststoffvorformlingen und Kunststoffbehältnissen, umfassend zumindest eine Spritzgussmaschine und eine Blasformmaschine, wobei die Kunststoffvorformlinge innerhalb der Spritzgussmaschine spritzgegossen und innerhalb der Blasformmaschine zu Kunststoffbehältnissen geformt und von der Spritzgussmaschine zur Blasformmaschine transportiert werden, wobei der Spritzgussmaschine eine Heizeinrichtung nachgeordnet ist und die Spritzgussmaschine und die Blasformmaschine miteinander gekoppelt sind. Die in der Spritzgussmaschine hergestellten Kunststoffvorformlinge werden unmittelbar nach ihrer Herstellung in einen thermischen Vorformlingsspeicher überführt, welcher die Kunststoffvorformlinge auf einer vorgegebenen Temperatur hält und wobei eine Drehzahl und/oder zumindest ein Parameter zumindest einer nachfolgenden Behandlungseinrichtung veränderbar ist.

Die US 2021/339452 A1 offenbart ein Verfahren zur Herstellung eines Harzbehälters umfassend das Spritzgießen einer Vielzahl von Vorformen in einer Anordnungsrichtung, das Anpassen der Temperatur der Vorformen und das Formen von Behältern aus den Vorformen. Das Herstellungsverfahren umfasst zwischen dem Spritzgießen und der Temperaturanpassung ein Ändern der Ausrichtung der in Anordnungsrichtung ausgerichteten Vorformlinge in eine in Förderrichtung ausgerichtete Ausrichtung.

Die US 2019/152121 A1 offenbart eine Blasformmaschine, die eine Spritzgusseinheit und eine Blasformeinheit umfasst, wobei die Spritzgusseinheit eine Vorform-Form und eine Einspritzvorrichtung umfasst, die dazu ausgebildet ist, Harz an die Vorform-Form zu liefern, wobei die Einspritzvorrichtung an einer Trägerplatte befestigt ist und wobei die Trägerplatte einen Positionseinstellmechanismus umfasst, der in der Lage ist, eine Position der Einspritzvorrichtung in einer oberen und unteren Richtung in Bezug auf die Vorform-Form einzustellen.

### Aufgabe

Ausgehend vom bekannten Stand der Technik liegt die zu lösende technische Aufgabe der vorliegenden Erfindung darin, den Herstellungsprozess von Behältern aus Vorformlingen effizienter zu gestalten und gleichzeitig die Qualität der hergestellten Behälter zu verbessern.

### Lösung

Diese Aufgabe wird erfindungsgemäß durch die Behälterbehandlungsanlage zum Regeln einer Temperatur eines Vorformlings gemäß unabhängigem Anspruch 1 und das entsprechende Verfahren gemäß unabhängigem Anspruch 7 gelöst. Bevorzugte Weiterbildungen sind in den abhängigen Ansprüchen erfasst.

Die erfindungsgemäße Behälterbehandlungsanlage zum Regeln einer Temperatur eines Vorformlings umfasst eine Herstellungsmaschine zum Herstellen eines Vorformlings, insbesondere eine Spritzgussmaschine, eine stromab der Herstellungsmaschine angeordnete Heizvorrichtung, eine stromab der Heizvorrichtung angeordnete Blasformmaschine und eine Steuereinheit, wobei die Steuereinheit ausgebildet ist, basierend auf einer Ist-Temperatur des Vorformlings an einer Position stromauf der Blasformmaschine einen Betriebsparameter wenigstens einer Komponente der Behälterbehandlungsanlage zu regeln, um eine Soll-Temperatur des Vorformlings an der Blasformmaschine zu erreichen.

Unter einer Anordnung stromab der Herstellungsmaschine beziehungsweise der Heizvorrichtung ist hierbei eine Anordnung stromab der Herstellungsmaschine beziehungsweise der Heizvorrichtung bezogen auf eine Transportrichtung der Vorformlinge zu verstehen.

Die Herstellungsmaschine kann zum Verarbeiten von Kunststoffen jeglicher Art eingerichtet sein und vorzugsweise zum Herstellen von Vorformlingen ausgebildet sein. Bei dem Kunststoff kann es sich beispielsweise um Polyethylenterephthalat (PET), Polyethylen (PE) oder Polypropylen (PP) handeln. Es kann sich jedoch auch um einen beliebigen anderen Kunstsoff, welcher zum Herstellen eines Vorformlings geeignet ist, handeln.

Bei der Herstellungsmaschine kann es sich insbesondere um eine Spritzgussmaschine handeln. Alternativ kann es sich auch um eine Vorrichtung zum Herstellen von Vorformlingen mittels eines Compression Moulding Verfahrens oder um eine Vorrichtung zum Herstellen von Vorformlingen mittels eines Injection Compression Moulding Verfahrens handeln. Es kann sich jedoch auch um jede andere Vorrichtung handeln, welche zum Herstellen eines Vorformlings geeignet ist.

Bei der Heizvorrichtung kann es sich um jede beliebige Heizvorrichtung handeln, welche ausgebildet ist, einen Vorformling zumindest auf einen Temperaturwert zu erwärmen, welcher zumindest der Soll-Temperatur entspricht. Beispielsweise kann die Heizvorrichtung als elektrische Widerstandsheizung, welche mehrere Glühlampen umfassen kann, ausgestaltet sein. Alternativ oder zusätzlich kann die Heizvorrichtung beispielsweise auch eine Infrarot- oder Mikrowellenheizvorrichtung umfassen. In einer Ausführungsform kann es vorgesehen sein, dass die Heizvorrichtung ausgebildet ist, ein bestimmtes Temperaturprofil in dem Vorformling, beispielsweise entlang dessen Längsachse, zu erzeugen. Die Heizvorrichtung kann jedoch auch ausgebildet sein, den Vorformling gleichmäßig auf eine bestimmte Temperatur zu erwärmen.

Die Blasformmaschine kann beispielsweise als Extrusionsblasformmaschine oder Streckblasformmaschine ausgestaltet sein. Vorzugsweise ist die Blasformmaschine ausgestaltet die Vorformlinge zu Behältern auszuformen. Bei den Behältern handelt es sich vorzugsweise um in der Getränkeindustrie verwendete Flaschen. Es kann sich jedoch auch um jeden anderen Behälter, wie beispielsweise wie beispielsweise Dosen, Gläser, Becher oder Tuben, wie sie beispielsweise in der Getränke-, Pharma-, Gesundheits- oder Lebensmittelindustrie verwendet werden, oder auch jeden anderen Behälter, welcher zum Aufnehmen eines beliebigen flüssigen oder pastösen Mediums geeignet sein kann.

Unter der Ist-Temperatur des Vorformlings kann beispielsweise eine Ist-Temperatur an einer bestimmten Oberflächenposition des Vorformlings, eine Ist-Temperaturverteilung, beispielsweise entlang einer Längsachse des Vorformlings, oder ein Temperaturmittelwert des Vorformlings verstanden werden.

Entsprechendes gilt für die Soll-Temperatur des Vorformlings.

Bei der Position des Vorformlings stromauf der Blasformmaschine kann es sich um jede Position handeln, welche der Vorformling bei einem Transport von der Herstellungsmaschine über die Heizvorrichtung bis hin zur Blasformmaschine durchläuft. Beispielsweise kann es sich bei der Position um den Auslass der Herstellungsmaschine oder um einen Auslass der Heizvorrichtung handeln. Es kann sich jedoch auch um jede andere Position zwischen der Herstellungsmaschine und der Blasformmaschine handeln.

Das Erreichen der Soll-Temperatur an der Blasformmaschine ist derart zu verstehen, dass die Soll-Temperatur des Vorformlings an einer beliebigen Position der Blasformmaschine erreicht werden soll, bevor der Vorformling zu einem Behälter ausgeformt wird. Bei der beliebigen Position der Blasformmaschine kann es sich beispielsweise um einen Einlauf der Blasformmaschine handeln, um eine Position in der Blasformmaschine zwischen dem Einlauf der Blasformmaschine und der Position an welcher der Vorformling in eine Blasform überführt wird, oder um eine Position einer der Blasformmaschine zugeordneten Transportrichtung, mittels welcher der Vorformlinge beispielsweise zu der Blasformmaschine transportiert werden kann.

Unter Komponente kann jedes Bauteil der Behälterbehandlungsanlage verstanden werden, dessen Betrieb mittels eines Betriebsparameters regelbar ist. Beispielsweise kann es sich bei der Komponente um die Herstellungsmaschine, die Heizvorrichtung, oder jede weitere hier nicht explizit angeführte Behälterbehandlungsmaschine der Behälterbehandlungsanlage handeln. Alternativ kann es sich bei der Komponente beispielsweise auch um eine Transportvorrichtung handeln, mittels welcher die Vorformlinge beispielsweise von der Herstellungsmaschine zu der Heizvorrichtung oder von der Heizvorrichtung zu der Blasformmaschine transportiert werden können.

Unter einem Betriebsparameter ist insbesondere ein Maschinenparameter einer Komponente der Blasformmaschine zu verstehen, durch dessen Regelung Einfluss auf die Temperatur des Vorformlings genommen werden kann.

Unter dem Betriebsparameter kann auch eine Zusammensetzung eines Materials zum Herstellen der Vorformlinge in der Herstellungsmaschine verstanden werden. Bei dem Material kann es sich beispielsweise, wie bereits weiter oben beschrieben, um ein Kunststoffbasiertes Material handeln, welches neben einem Kunststoff noch weitere Bestandteile umfassen kann. Unter dem Regeln des Betriebsparameters kann in diesem Fall eine Veränderung einer Zusammensetzung des Materials durch Zugabe von wenigstem einem von einem Additiv, von Kunststoff-Flakes einer bestimmten Partikelgröße, von Kunststoff-Flakes einer bestimmten Partikelgrößenverteilung, von Recyclat, von recyceltem Polyethylenterephthalat (PET) und/oder von Farbpartikeln verstanden werden. Die eben genannte Auswahl von Materialkomponenten ist als nicht beschränkend zu verstehen, so dass auch weitere hier nicht explizit erwähnte Materialkomponenten dem Material zugegeben werden können, um die Materialzusammensetzung zu verändern.

Durch die erfindungsgemäße Behälterbehandlungsanlage kann ein Vorformling produziert und zu einem Behälter weiterverarbeitet werden. Somit können Transport- beziehungsweise Lagerungsbedingte Beschädigungen und Verunreinigungen an den Vorformlingen und den daraus erzeugten Behältern verhindert, Transportkosten gespart und gleichzeitig die Qualität der erzeugten Behälter verbessert werden. Durch das Regeln der Temperatur des Vorformlings basierend auf einem Ist-Wert, um eine Soll-Temperatur an der Blasformmaschine zu erzeugen, kann die Qualität der ausgeformten Behälter verbessert werden.

In einer Ausführungsform kann die wenigstens eine Komponente die Heizvorrichtung umfassen und der Betriebsparamater eine Heizleistung, ein Heizprofil und/oder eine Heizdauer der Heizvorrichtung sein. Die Heizvorrichtung ermöglicht eine besonders flexible und einfache Regelung der Temperatur des Vorformlings. Die Heizleistung, das Heizprofil und/oder die Heizdauer der Heizvorrichtung stehen dabei in direktem Zusammenhang mit der Temperatur des Vorformlings und stellen somit geeignete Betriebsparameter zum Erzeugen einer Soll-Temperatur des Vorformlings dar.

In einer Ausführungsform kann die wenigstens eine Komponente die Herstellungsmaschine zum Herstellen des Vorformlings umfassen. Durch Regelung eines Betriebsparameters der Herstellungsmaschine kann die Temperatur des durch die Herstellungsmaschine ausgegebenen Vorformlings flexibel angepasst werden und somit eine bestimmte Soll-Temperatur des Vorformlings an der Blasformmaschine erreicht werden.

In einer Weiterbildung dieser Ausführungsform kann der Betriebsparameter eine Zykluszeit, eine Einspritzdauer, eine Lock to Lock Zeit, eine Herstellungswerkzeugtemperatur, eine Schmelztemperatur, eine Nachkühltemperatur der Herstellungsmaschine und/oder eine Zusammensetzung eines Materials zum Herstellen der Vorformlinge in der Herstellungsmaschine sein. Mit Zykluszeit ist die Zeitdauer gemeint, um einen Vorformling mit der Herstellungsmaschine herzustellen. Unter Herstellungswerkzeugtemperatur ist die Temperatur eines Herstellungswerkzeugs der Herstellungsmaschine zu verstehen, in welchem der Vorformling hergestellt wird. Mit Schmelztemperatur ist wiederum die Temperatur zu verstehen, mit welcher das Material, beispielsweise ein Kunststoff, zur Herstellung des Vorformlings in der Herstellungsmaschine aufgeschmolzen wird und unter Nachkühltemperatur eine Temperatur auf welche der Vorformling nach der Herstellung mittels Nachkühleinheiten abgekühlt werden kann. Unter Lock to Lock Zeit ist die Zeit zu verstehen, welche das Herstellungswerkzeug zum Öffnen und Schließen benötigt. In dieser Zeit kann keine Herstellung von Vorformlingen in der Herstellungsmaschine stattfinden, so dass die Lock to Lock Zeit einer Totzeit gleichgesetzt werden kann. Da diese Betriebsparameter der Herstellungsmaschine direkten Einfluss auf die Temperatur mit welcher der Vorformling aus der Herstellungsmaschine ausgegeben wird haben, sind diese Betriebsparameter besonders geeignet die Temperatur des Vorformlings zu regeln, um eine Soll-Temperatur an der Blasformmaschine zu erreichen.

In einer Ausführungsform kann die Steuereinheit ausgebildet sein, einen Betriebsparameter der Heizvorrichtung und einen Betriebsparameter der Herstellungsmaschine zu regeln, wenn die Ist-Temperatur unter- oder oberhalb eines Schwellenwertes liegt. Liegt die Ist-Temperatur des Vorformlings unter einem Schwellenwert kann es nötig sein, dass die Regelung eines Betriebsparameters der Herstellungsmaschine oder Heizvorrichtung nicht ausreichend ist, um die Soll-Temperatur des Vorformlings an der Blasformmaschine zu erreichen. Durch Regelung eines Betriebsparameters der Herstellungsmaschine und der Heizvorrichtung kann auch in diesem Fall sichergestellt werden, dass die Soll-Temperatur des Vorformlings an der Blasformmaschine erreicht wird und die Vorformlinge zu Behältern in gewünschter Qualität ausgeformt werden können.

In einer Ausführungsform kann die wenigstens eine Komponente eine zwischen der Herstellungsmaschine und der Heizvorrichtung angeordnete erste Transportvorrichtung und/oder eine zwischen der Heizvorrichtung und der Blasformmaschine angeordnete zweite Transportvorrichtung umfassen. Durch die Regelung eines Betriebsparameters der ersten und/oder zweiten Transportvorrichtung kann eine Temperaturänderung der Vorformlinge bei ihrem Transport zwischen der Herstellungsmaschine und der Heizvorrichtung beziehungsweise zwischen Heizvorrichtung und Blasformmaschine gesteuert werden (beispielsweise durch Steuern der Transportgeschwindigkeit und der dadurch bedingten Transportdauer) und somit die Soll-Temperatur der Vorformlinge an der Blasformmaschine erreicht werden.

In einer Weiterbildung dieser Ausführungsform kann der Betriebsparameter eine Transportgeschwindigkeit, eine an der ersten und/oder zweiten Transportvorrichtung vorherrschende Umgebungstemperatur und/oder eine Anzahl von Vorformlingen sein, welche mit der ersten und/oder zweiten Transportvorrichtung innerhalb eines bestimmten Zeitintervalls transportiert werden. Da diese Betriebsparameter der ersten und/oder zweiten Transportvorrichtung direkten Einfluss auf die Temperatur der Vorformlinge an der Blasformmaschine haben, ist die Regelung dieser Parameter besonders geeignet, um eine bestimmte Soll-Temperatur der Vorformlinge an der Blasformmaschine zu erreichen.

Erfindungsgemäß ist außerdem ein Verfahren zum Regeln einer Temperatur eines Vorformlings in einer Behälterbehandlungsanlage vorgesehen, wobei die Behälterbehandlungsanlage eine Herstellungsmaschine zum Herstellen des Vorformlings, insbesondere eine Spritzgussmaschine, eine stromab der Herstellungsmaschine angeordnete Heizvorrichtung, eine stromab der Heizvorrichtung angeordnete Blasformmaschine und eine Steuereinheit umfasst und durch die Steuereinheit basierend auf einer Ist-Temperatur des Vorformlings an einer Position stromauf der Blasformmaschine ein Betriebsparameter wenigstens einer Komponente der Behälterbehandlungsanlage geregelt wird, so dass eine Soll-Temperatur des Vorformlings an der Blasformmaschine erreicht wird.

Durch die Herstellung und Weiterverarbeitung der Vorformlinge in einer Anlage können Transportbeziehungsweise Lagerungsbedingte Beschädigungen und Verunreinigungen an den Vorformlingen und den daraus erzeugten Behältern verhindert, Transportkosten gespart und gleichzeitig die Qualität der erzeugten Behälter verbessert werden. Zudem kann durch die Erzeugung einer Soll-Temperatur an der Blasformmaschine, Behälter mit besonders gleichmäßiger Wanddickenverteilung hergestellt und die Qualität der Behälter somit verbessert werden.

In einer Ausführungsform kann die wenigstens eine Komponente die Heizvorrichtung umfassen und der Betriebsparamater kann eine Heizleistung, ein Heizprofil und/oder eine Heizdauer der Heizvorrichtung sein. Mittels der Heizvorrichtung und der Regelung der Heizleistung, des Heizprofils und/oder der Heizdauer kann die Temperatur des Vorformlings flexibel und auf einfache Weise eingestellt und somit die Soll-Temperatur des Vorformlings an der Blasformmaschine erreicht werden.

In einer Ausführungsform kann die wenigstens eine Komponente die Herstellungsmaschine zum Herstellen des Vorformlings umfassen. Durch Regelung eines Betriebsparameters der Herstellungsmaschine kann die Temperatur des durch die Herstellungsmaschine ausgegebenen Vorformlings flexibel und auf einfach Weise eingestellt werden, so dass eine bestimmte Soll-Temperatur an der Blasformmaschine erreicht werden kann

In einer Weiterbildung dieser Ausführungsform kann der Betriebsparameter eine Zykluszeit, eine Einspritzdauer, eine Lock to Lock Zeit, eine Herstellungswerkzeugtemperatur, eine Schmelztemperatur, eine Nachkühltemperatur der Herstellungsmaschine und/oder eine Zusammensetzung eines Materials zum Herstellen der Vorformlinge in der Herstellungsmaschine sein. Da diese Betriebsparameter der Herstellungsmaschine direkten Einfluss auf die Temperatur des durch die Herstellungsmaschine ausgegebenen Vorformlings haben, sind diese besonders geeignet die Temperatur des Vorformlings zu regeln und somit eine Soll-Temperatur des Vorformlings an der Blasformmaschine zu erreichen.

In einer Ausführungsform kann ein Betriebsparameter der Heizvorrichtung und ein Betriebsparameter der Herstellungsmaschine durch die Steuereinheit geregelt werden, wenn die Ist-Temperatur unter- oder oberhalb eines Schwellenwertes liegt. Wenn die Ist-Temperatur des Vorformlings unter einem Schwellenwert liegt, kann es sein, dass die Regelung eines Betriebsparameters der Herstellungsmaschine oder eines Betriebsparameters der Heizvorrichtung nicht ausreichend ist, um die Soll-Temperatur des Vorformlings an der Blasformmaschine zu erreichen. Durch Regelung eines Betriebsparameters der Herstellungsmaschine und der Heizvorrichtung kann auch in diesem Fall sichergestellt werden, dass die Soll-Temperatur des Vorformlings an der Blasformvorrichtung erreicht wird und die Vorformlinge zu Behältern in der gewünschten Qualität ausgeformt werden.

In einer Ausführungsform kann die wenigstens eine Komponente eine zwischen der Herstellungsmaschine und der Heizvorrichtung angeordnete erste Transportvorrichtung und/oder eine zwischen der Heizvorrichtung und der Blasformmaschine angeordnete zweite Transportvorrichtung umfassen. Durch die Regelung eines Betriebsparameters der ersten und/oder zweiten Transportvorrichtung kann eine Temperaturänderung der Vorformlinge bei ihrem Transport zwischen der Herstellungsmaschine und der Heizvorrichtung beziehungsweise zwischen der Heizvorrichtung und der Blasformmaschine gesteuert werden und somit die Soll-Temperatur der Vorformlinge an der Blasformmaschine erreicht werden.

In einer Weiterbildung dieser Ausführungsform kann der Betriebsparameter eine Transportgeschwindigkeit der ersten und/oder zweiten Transportvorrichtung, eine an der ersten und/oder zweiten Transportvorrichtung vorherrschende Umgebungstemperatur und/oder eine Anzahl von Vorformlingen sein, welche mit der ersten und/oder zweiten Transportvorrichtung transportiert werden. Da diese Betriebsparameter der ersten und/oder zweiten Transportvorrichtung direkten Einfluss auf die Temperatur der Vorformlinge an der Blasformmaschine haben, ist die Regelung dieser Parameter besonders geeignet, um eine bestimmte Soll-Temperatur der Vorformlinge an der Blasformmaschine zu erreichen.

In einer Ausführungsform kann es sich bei der Ist- und/oder der Solltemperatur um eine Ist- und/oder Solltemperaturverteilung des Vorformlings handeln. Durch das Erzeugen einer Solltemperaturverteilung der Vorformlinge an der Blasformmaschine kann das Blasformverhalten der Vorformlinge vorteilhaft verbessert werden und eine Behälter mit besonders gleichmäßiger Wanddickenverteilung erzeugt werden. Somit können potentielle Abweichung der Form des hergestellten Behälters von einer idealen Form minimiert werden.

### Kurze Beschreibung der Figuren

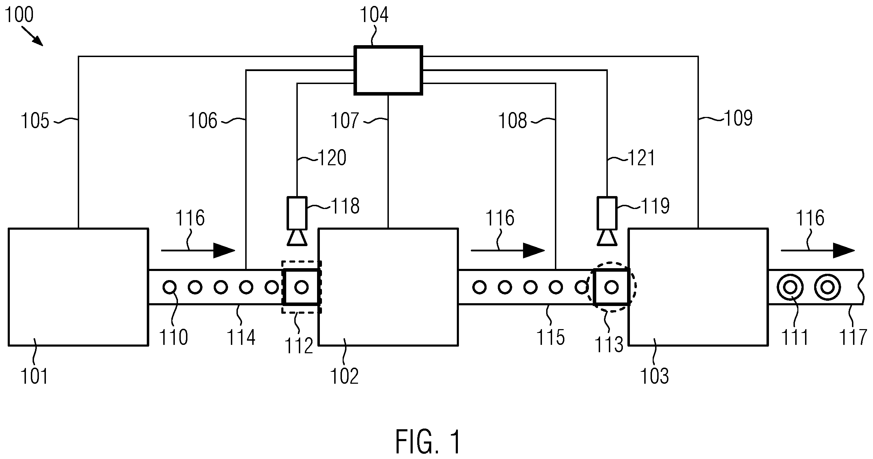

- Fig. 1: Behälterbehandlungsanlage zum Regeln einer Temperatur eines Vorformlings entsprechend einer Ausführungsform

### Ausführliche Beschreibung der Figuren

Fig. 1 zeigt eine Behälterbehandlungsanlage 100 zum Regeln einer Temperatur eines Vorformlings 110 entsprechend einer Ausführungsform.

Erfindungsgemäß umfasst die Behälterbehandlungsanlage 100 eine Herstellungsmaschine 101, eine bezüglich einer Transportrichtung 116 des Vorformlings 110 stromab der Herstellungsmaschine 101 angeordnete Heizvorrichtung 102, eine stromab der Heizvorrichtung 102 in Transportvorrichtung 116 des Vorformlings 110 angeordnete Blasformmaschine 103 und eine Steuereinheit 104.

Die Steuereinheit 104 (etwa ein Computer mit Prozessor und zugeordnetem Speicher) ist erfindungsgemäß ausgebildet, basierend auf einer Ist-Temperatur des Vorformlings 110 an einer Position 112 stromauf der Blasformmaschine 103 einen Betriebsparameter wenigstens einer Komponente der Behälterbehandlungsanlage 100 zu regeln, um eine Soll-Temperatur des Vorformlings 110 an der Blasformmaschine 113 zu erreichen.

Außerdem gezeigt ist eine optionale erste Transportvorrichtung 114 zwischen Herstellungsmaschine 101 und Heizvorrichtung 102, welche zum Transport der Vorformlinge 110 von der Herstellungsmaschine 101 zu der Heizvorrichtung 102 vorgesehen ist, und eine optionale zweite Transportvorrichtung 115 zwischen Heizvorrichtung 102 und Blasformmaschine 103, welche zum Transport der Vorformlinge 110 von der Heizvorrichtung 102 zur Blasformmaschine 103 vorgesehen ist. Ebenfalls optional kann stromab der Blasformmaschine 103 in Transportrichtung 116 der Behälter 111 eine dritte Transportvorrichtung 117 vorgesehen sein. Mittels der dritten Transportvorrichtung 117 können die Behälter 111 an wenigstens eine weitere, hier nicht explizit gezeigte, Behälterbehandlungsmaschine weitertransportiert werden.

Bei der wenigstens einen Behälterbehandlungsmaschine kann es sich beispielsweise um eine Vorrichtung zur Vorbehandlung von Behältern 111, beispielsweise mittels eines Plasma- oder Coronaverfahrens, um einen Füller, zum Befüllen der Behälter 111 mit einem Getränk oder einer anderen Flüssigkeit, um eine Etikettiervorrichtung, um eine Direktdruckvorrichtung und/oder ein Verschließer handeln. Es kann sich jedoch auch um jede andere hier nicht explizit angeführte Vorrichtung handeln, welche zum Behandeln von Behältern 111 geeignet ist.

In der hier diskutierten Ausführungsform sind die optionalen Transportvorrichtungen 114, 115, 117 als lineare Transportvorrichtungen ausgestaltet. In einer alternativen Ausführungsform kann es auch vorgesehen sein, dass die Transportvorrichtungen als Drehsterne ausgestaltet sind.

Die Herstellungsmaschine 101 kann zum Verarbeiten von Kunststoffen jeglicher Art eingerichtet sein und vorzugsweise zum Herstellen von Vorformlingen 110 ausgebildet sein. Beispielsweise kann die Herstellungsmaschine 101 zum Verarbeiten von Polyethylenterephthalat (PET) beziehungsweise zur Herstellung von Vorformlingen 110 aus PET ausgestaltet sein. Alternativ kann die Herstellungsmaschine 101 beispielsweise auch zur Verarbeitung von Polyethylen (PE) oder Polypropylen (PP) und zur Herstellung von Vorformlingen 110 aus PE oder PP ausgebildet sein. Diese Beispiele sind allerdings nicht als beschränkend zu verstehen, so dass auch jeder andere für die Herstellung eines Vorformlings 110 geeignete Kunststoff durch die Herstellungsmaschine 101 zu einem Vorformling 110 verarbeitet werden kann. Die Herstellungsmaschine 101 kann in einer Ausführungsform eine Vielzahl von Herstellungswerkzeugen umfassen, wobei jedes Herstellungswerkzeug wenigstens eine Kavität aufweist. Die Form der Kavität stellt dabei einen Negativabdruck des durch die Herstellungsmaschine 101 erzeugten Vorformlings 110 dar. Die verschiedenen Herstellungswerkzeuge können verschieden ausgestaltete Kavitäten umfassen, so dass die Herstellungsmaschine 101 flexible einsetzbar ist und zur Erzeugung von Vorformlingen 110 verschiedener Art ausgebildet sein kann.

Bei der Herstellungsmaschine kann es sich insbesondere um eine Spritzgussmaschine handeln. Alternativ kann es sich auch um eine Vorrichtung zum Herstellen von Vorformlingen mittels eines Compression Moulding Verfahrens oder um eine Vorrichtung zum Herstellen von Vorformlingen mittels eines Injection Compression Moulding Verfahrens handeln. Es kann sich jedoch auch um jede andere Vorrichtung handeln, welche zum Herstellen eines Vorformlings geeignet ist.

Bei der Heizvorrichtung 102 kann es sich um jede Heizvorrichtung 102 handeln, welche zum Erwärmen eines Vorformlings 110 geeignet ist. In einer Ausführungsform kann es sich um eine Widerstandsheizvorrichtung handeln. Alternativ kann es sich auch um eine Infrarotheizvorrichtung oder um eine Mikrowellenheizvorrichtung handeln. Die Heizvorrichtung 102 kann ausgebildet sein, den Vorformling 110, beziehungsweise dessen Oberfläche, gleichmäßig auf eine bestimmte Temperatur zu erhitzen. In einer Ausführungsform kann die Heizvorrichtung 102 auch ausgebildet sein, eine bestimmte Temperaturverteilung in dem Vorformling 110, beispielsweise entlang dessen Längsachse, zu erzeugen. Wird eine bestimmte Temperaturverteilung in dem Vorformling 110 erzeugt, dann kann beim Blasformvorgang ein Behälter 111 mit einer besonders gleichmäßigen Wanddickenverteilung erzeugt und somit die Qualität der hergestellten Behälter 111 verbessert werden.

Bei der Blasformmaschine 103 kann es sich beispielsweise um eine Extrusionsblasformmaschine oder um eine Streckblasformmaschine handeln. In einer Ausführungsform kann die Blasformmaschine 103 als Rundläufermaschine ausgestaltet sein, wobei die Blasformmaschine 103 eine Vielzahl von Behälteraufnahmen umfassen kann, welche entlang des Umfangs der Rundläufermaschine angerordnet sein können. Die Blasformmaschine 103 kann vorzugsweise ausbildet sein, die mittels der Herstellungsmaschine 101 erzeugten Vorformlinge 110 zu Behältern 111 auszuformen.

Bei den mittels der Blasformmaschine 103 aus den Vorformlingen 110 erzeugten Behältern 111 kann es sich um in der Getränkeindustrie verwendete Flaschen handeln. Alternativ kann es sich bei den Behältern 111 jedoch auch um jede andere Art von Behälter, wie beispielsweise eine Dose, ein Glas, einen Becher oder eine Tube handeln, wie sie beispielsweise in der Getränke-, Pharma-, Gesundheits- oder Lebensmittelindustrie verwendet werden, oder auch um jeden anderen Behälter 111 handeln, welcher zum Aufnehmen eines beliebigen flüssigen oder pastösen Mediums geeignet sein kann.

Die Steuereinheit 104 kann als Computer, Server, oder jede beliebige andere Rechnereinheit ausgeführt sein und zur Steuerung eines Betriebs der Behälterbehandlungsanlage 100 beziehungsweise zur Steuerung eines Betriebsparameters wenigstens einer Komponente der Behälterbehandlungsanlage 100 ausgestaltet sein.

Unter einer Komponente der Behälterbehandlungsanlage 100 kann beispielsweise die Herstellungsmaschine 101 oder die Heizvorrichtung 102 verstanden werden. Mit Komponente können jedoch auch alle anderen Komponenten der Behälterbehandlungsanlage verstanden werden, deren Betrieb mittels eines Betriebsparameters regelbar ist. Vorzugsweise handelt es sich um Komponenten, welche durch Regelung eines Betriebsparameters Einfluss auf die Temperatur des Vorformlings 110 nehmen können. So kann es sich bei der Komponente beispielsweise auch um eine der optionalen Transportvorrichtungen 114, 115, 117 handeln.

Zur Steuerung des Betriebs der wenigstens einen Komponente kann die Steuereinheit 104 mit der wenigstens einen Komponente der Behälterbehandlungsanlage 100 über eine Kabelverbindung verbunden sein. Dies ist zum Beispiel bei der im Zusammenhang mit der Fig. 1 diskutierten Ausführungsform der Fall, wo die Steuereinheit 104 über eine Kabelverbindung 105 mit der Herstellungsmaschine 101, über eine Kabelverbindung 107 mit der Heizvorrichtung 102 und über eine Kabelverbindung 109 und mit der Blasformmaschine 103 verbunden ist. Auch mit den optionalen Transportvorrichtungen 114, 115 kann die Steuereinheit über Kabelverbindungen 106, 108 verbunden sein. Alternativ kann es auch vorgesehen sein, dass die Steuereinheit 104 mit der wenigstens einen Komponente über eine drahtlose Verbindung, wie beispielsweise eine WLAN Verbindung verbunden ist.

Optional kann die Steuereinheit 104 eine Speichereinheit umfassen. In einer Ausführungsform kann in der Speichereinheit eine Datenbank hinterlegt sein, wobei in der Datenbank wenigstens einer bestimmten Ist-Temperatur des Vorformlings 110 an einer bestimmten Position 112 stromauf der Blasformmaschine 103 ein entsprechender Betriebsparameterwert für wenigstens eine Komponente der Behälterbehandlungsanlage 100 zugeordnet ist, so dass eine bestimmte Soll-Temperatur des Vorformlings 110 an der Blasformmaschine 103 erreichen werden kann. Alternativ kann es auch vorgesehen sein, dass in der Speichereinheit für wenigstens eine Komponente eine Funktion hinterlegt ist, wobei mittels der Funktion basierend auf einer Ist-Temperatur des Vorformlings 110 an einer bestimmten Position 112 stromauf der Blasformmaschine 103 und einer Soll-Temperatur des Vorformlings 110 an der Blasformmaschine 103 ein Betriebsparameterwert für die wenigstens eine Komponente bestimmten werden kann, so dass die Soll-Temperatur des Vorformlings 110 an der Blasformmaschine erreicht werden kann.

In einer Ausführungsform kann die Steuereinheit 104 zur Regelung des Betriebsparameters der wenigstens einen Komponente, den Betriebsparameter auf den mittels der in der Speichereinheit hinterlegten Datenbank oder mittels der in der Speichereinheit hinterlegten Funktion bestimmten Betriebsparameterwert setzen.

Unter der Ist-Temperatur des Vorformlings 110 ist insbesondere eine Ist-Temperatur an einer bestimmten Oberflächenposition des Vorformlings 110, eine Ist-Temperaturverteilung, beispielsweise entlang einer Längsachse des Vorformlings 110, oder ein Temperaturmittelwert des Vorformlings zu verstehen. Analog zur Ist-Temperatur kann es sich auch bei der Soll-Temperatur um eine Soll-Temperatur an einer bestimmten Oberflächenposition des Vorformlings 110, eine SollTemperaturverteilung, beispielsweise entlang einer Längsachse des Vorformlings 110 oder um einen Soll-Temperaturmittelwert handeln.

In der im Zusammenhang mit der Figur 1 diskutierten Ausführungsform ist die Position stromauf der Blasformmaschine als ein Einlauf der Heizvorrichtung 112 gewählt. Diese Position ist als beispielhaft und nicht beschränkend zu verstehen. So kann die Regelung des Betriebsparameters auch basierend auf einer Ist-Temperatur an jeder anderen Position stromauf der Blasformmaschine vorgenommen werden. Unter der Position stromauf der Blasformmaschine 112 kann generell jede Position verstanden werden, welche der Vorformling 110 bei einem Transport von der Herstellungsmaschine 101 zu der Blasformmaschine 103 durchläuft. Beispielsweise kann es sich bei der Position stromauf der Blasformmaschine 103 auch um einen Auslass der Herstellungsmaschine 101, um einen Auslass der Heizvorrichtung 102 oder um einen Einlauf der Blasformmaschine 113 handeln. Es kann sich jedoch beispielsweise auch um jede Position entlang der optionalen ersten und/oder zweiten Transportvorrichtung 114, 115 handeln.

In der hier gezeigten Ausführungsform soll die Soll-Temperatur des Vorformlings 110 an einem Einlauf 113 der Blasformmaschine 103 erreicht werden. Alternativ kann es auch vorgesehen sein, dass die Soll-Temperatur des Vorformlings 110 an einer beliebigen anderen Stelle in der Blasformmaschine 103 erzeugt werden soll, beispielsweise an einer Position zwischen dem Einlauf der Blasformmaschine 113 und einer Position in der Blasformmaschine 103, an welcher die Vorformlinge 110 beispielweise in eine Blasform überführt werden. Alternativ kann es auch vorgesehen sein, dass die Soll-Temperatur an einer Position einer der Blasformmaschine 103 zugeordneten Transporteinrichtung, wie beispielsweise der optionalen zweiten Transportvorrichtung 115 erzeugt werden soll.

Bevorzugt werden Soll- und Ist-Temperatur am selben Punkt (etwa am Einlauf der Blasformmaschine oder am Einlauf der Heizeinrichtung) bestimmt und/oder definiert.

Zur Bestimmung der Ist-Temperatur des Vorformlings 110 kann ein erster Temperatursensor 118 vorgesehen sein. Bei dem ersten Temperatursensor 118 kann es sich beispielsweise um einen Infrarottemperatursensor handeln, mittels welchem die Temperatur des Vorformlings 110 kontaktlos bestimmt werden kann. Insbesondere kann der erste Temperatursensor 118 ausgebildet sein, eine Temperatur an einer bestimmten Oberflächenposition des Vorformlings 110, eine Temperaturverteilung des Vorformlings 110, beispielsweise entlang dessen Längsachse oder einen Temperaturmittelwert des Vorformlings 110 zu bestimmen. Diese Ausgestaltungsart des ersten Temperatursensors 118 ist als beispielhaft zu verstehen, so dass der erst Temperatursensor 118 auch als jede andere Art von Temperatursensor ausgestaltet sein kann, welcher zum Bestimmen der Ist-Temperatur des Vorformlings 110 geeignet ist.

In einer Ausführungsform kann der erste Temperatursensor 118 entlang der Transportrichtung 116 der Vorformlinge bewegbar gelagert sein, so dass die Temperatur des Vorformlings 110 an jeder beliebigen Position zwischen der Herstellungsmaschine 101 und der Blasformmaschine 103 bestimmt werden kann. Der erste Temperatursensor 118 kann mittels einer Kabelverbindung 120 (oder alternativ einer Drahtlosverbindung) mit der Steuereinheit 104 verbunden sein.

Optional kann ein zweiter Temperatursensor 119 vorgesehen sein, um die Temperatur des Vorformlings 110 an der Blasformmaschine 113 zu bestimmen. Der zweite Temperatursensor 119 kann als Kontrollsensor vorgesehen sein, um zu überprüfen ob die Temperatur des Vorformlings 110 an der Blasformmaschine 113 tatsächlich der Soll-Temperatur entspricht. Wie der erste Temperatursensor 118 kann auch der zweite Temperatursensor 119 ausgebildet sein, eine Temperatur an einer bestimmten Oberflächenposition des Vorformlings 110, eine Temperaturverteilung des Vorformlings 110, beispielsweise entlang dessen Längsachse oder einen Temperaturmittelwert des Vorformlings 110 zu bestimmen. Auch der zweite Temperatursensor 119 kann beispielsweise als Infrarot-Temperatursensor ausgestaltet sein und mittels einer Kabelverbindung 121 (alternativ mittels einer Drahtlosverbindung) mit der Steuereinheit 104 verbunden sein. Wie der erste Temperatursensor 118 kann auch der zweite Temperatursensor 119 als jede beliebige Art von Temperatursensor ausgebildet sein, welcher zum Bestimmen der Temperatur des Vorformlings 110 geeignet ist.

Die Steuereinheit 104 kann somit basierend auf der durch den optionalen ersten Temperatursensor 118 bestimmten Ist-Temperatur des Vorformlings 110 an einer Position 112 stromauf der Blasformmaschine 103, mittels der in der Speichereinheit hinterlegten Datenbank oder der in der Speichereinheit hinterlegten Funktion einen Betriebsparameterwert bestimmen und basierend auf dem so bestimmten Betriebsparameterwert den Betriebsparameter der Komponente regeln, um eine Soll-Temperatur des Vorformlings 110 an der Blasformmaschine 113 zu erreichen.

Optional kann es auch vorgesehen sein, dass die Steuereinheit 104 mittels der durch den zweiten Temperatursensor 119 erlangten Temperatur des Vorformlings 110 überprüft, ob der Vorformling 110 an der Blasformmaschine 113 auch tatsächlich die gewünschte Soll-Temperatur aufweist. Für den Fall, dass die gewünschte Soll-Temperatur trotz Regelung des Betriebsparameters nicht erreicht werden konnte, kann es in einer Ausführungsform vorgesehen sein, dass die Steuereinheit 104 den Betriebsparameter der Komponente so lange nachregelt, bis die gewünschte Soll-Temperatur an der Blasformmaschine 113 erreicht wird. Hierfür kann beispielsweise ein Regelkreis vorgesehen sein.

In einer Ausführungsform kann die wenigstens eine Komponente die Heizvorrichtung 102 umfassen. Durch die Heizvorrichtung 102 kann die Temperatur des Vorformlings 110 flexibel und auf einfache Weise eingestellt werden, so dass das Regeln eines Betriebs der Heizvorrichtung 102 besonders geeignet ist, um eine Soll-Temperatur des Vorformlings 110 an der Blasformmaschine 113 zu erreichen. Bei dem Betriebsparameter der Heizvorrichtung 102 kann es sich beispielsweise um eine Heizleistung, ein Heizprofil und/oder eine Heizdauer handeln. Diese Parameter haben direkten Einfluss auf die Temperatur beziehungsweise auf eine Temperaturverteilung des Vorformlings 110 und erlauben deswegen ein besonders einfaches und flexibles Einstellen der Temperatur des Vorformlings 110.

In einer Ausführungsform kann auch vorgesehen sein, dass die wenigstens eine Komponente die Herstellungsmaschine 101 zum Herstellen des Vorformlings 110 umfasst. Durch Regelegung eines Betriebsparameters der Herstellungsmaschine 101 kann die Temperatur mit welcher der fertig hergestellte Vorformling 110 durch die Herstellungsmaschine 101 ausgegeben wird, geregelt werden und somit auch die Temperatur des Vorformlings 110 an der Blasformmaschine 113 beeinflusst werden. Bei dem Betriebsparameter der Herstellungsmaschine 101 kann es sich beispielsweise um eine Zykluszeit, eine Einspritzdauer, eine Lock to Lock Zeit, eine Herstellungswerkzeugtemperatur, eine Schmelztemperatur, eine Nachkühltemperatur der Herstellungsmaschine und/oder eine Zusammensetzung eines Materials zum Herstellen der Vorformlinge in der Herstellungsmaschine 101 handeln. Bei dem Material kann es sich beispielsweise um ein Kunststoff-basiertes Material handeln, welches neben einem Kunststoff noch weitere Bestandteile umfassen kann. Diese Betriebsparameter haben direkten Einfluss auf die Temperatur des Vorformlings 110, mit welcher der Vorformling durch die Herstellungsmaschine 101 ausgegeben wird, und sind somit besonders geeignet, um eine Soll-Temperatur des Vorformlings 110 an der Blasformmaschine 113 zu erreichen.

Handelt es sich bei dem Betriebsparameter um die Zusammensetzung des Materials zum Herstellen der Vorformlinge in der Herstellungsmaschine 101, so kann unter dem Regeln des Betriebsparameters eine Veränderung einer Zusammensetzung des Materials durch Zugabe von wenigstem einem von einem Additiv, von Kunststoff-Flakes einer bestimmten Partikelgröße, von Kunststoff-Flakes einer bestimmten Partikelgrößenverteilung, von Recyclat, von recyceltem Polyethylenterephthalat (PET) und/oder von Farbpartikeln verstanden werden.

Die eben genannte Auswahl ist als nicht beschränkend zu verstehen, so dass auch weitere hier nicht explizit erwähnte Materialkomponenten dem Material zugegeben werden können, um die Materialzusammensetzung zu verändern.

Die Herstellungsmaschine 101 kann hierfür optional eine oder mehrere Speichereinheiten umfassen, in welchen die oben genannten Materialkomponenten und auch jede andere geeignete hier nicht explizit erwähnte Materialkomponente gespeichert sein können. Die optionalen Speichereinheiten können mit einer zentralen Speichereinrichtung für das Material zum Herstellen der Vorformlinge, welche von der Herstellungsmaschine 101 umfasst sein kann, in Verbindung stehen und durch die Steuereinheit 104 derart angesteuert werden, dass eine Zugabe wenigstens einer der Materialkomponenten zu dem in der zentralen Speichereinrichtung gespeicherten Material zum Herstellen der Vorformlinge basierend auf der Ist-Temperatur des Vorformlings 110 an einer Position 112 stromauf der Blasformmaschine 103 der Speichervorrichtung erfolgen kann und die Materialzusammensetzung auf diese Weise verändert werden kann. Durch die Veränderung der Materialzusammensetzung kann eine Veränderung der Temperatur, mit welcher die Vorformlinge die Herstellungsmaschine 101 verlassen, bewirkt werden und eine Soll-Temperatur der Vorformlinge 110 an der Blasformmaschine 113 erreicht werden.

In einer weiteren Ausführungsform kann die wenigstens eine Komponente die zwischen der Herstellungsmaschine 101 und der Heizvorrichtung 102 angeordnete erste Transportvorrichtung 114 und/oder die zwischen der Heizvorrichtung 102 und der Blasformmaschine 103 angeordnete zweite Transportvorrichtung 115 umfassen. Da beispielweise die Transportgeschwindigkeit mit welcher die Vorformlinge 110 von der Herstellungsmaschine 101 zu der Heizvorrichtung 102 und/oder von der Heizvorrichtung 102 zu der Blasformmaschine 103 transportiert werden oder auch die Umgebungsbedingungen entlang der ersten 114 und/oder zweiten Transportvorrichtung 115 Einfluss auf die Temperatur des Vorformlings 110 nehmen können, kann auch durch Regelung eines Betriebsparameters der ersten 114 und/oder zweiten Transportvorrichtung 115 die Soll-Temperatur des Vorformlings 110 an der Blasformmaschine 113 eingestellt werden.

Bei dem Betriebsparameter der ersten 114 und/oder zweiten Transportvorrichtung 115 kann es sich beispielsweise um eine Transportgeschwindigkeit, eine an der ersten und/oder zweiten Transportvorrichtung 114, 115 vorherrschende Umgebungstemperatur und/oder eine Anzahl von Vorformlingen 110 handeln, welche mit der ersten und/oder zweiten Transportvorrichtung 114, 115 innerhalb eines bestimmten Zeitintervalls transportiert werden können. Mittels diesen Parametern kann direkt Einfluss auf die Temperatur, welche die Vorformlinge 110 an der Blasformmaschine 113 aufweisen, genommen werden kann, und durch deren Regelung somit eine Soll-Temperatur der Vorformlinge 110 an der Blasformmaschine 113 erreicht werden.

In einer Ausführungsform kann es ausreichend sein, dass ein Betriebsparameter (genau) einer Komponente geregelt wird, um eine Soll-Temperatur des Vorformlings 110 an der Blasformmaschine 113 zu erreichen. So kann beispielsweise ausreichend sein, dass eine Heizleistung, ein Heizprofil oder eine Heizdauer der Heizvorrichtung geregelt wird oder alternativ ein Parameter der Herstellungsmaschine 101 geregelt wird.

In einer alternativen Ausführungsform kann es auch vorgesehen sein, dass wenigstens zwei verschiedene Betriebsparameter (genau) einer Komponente geregelt werden, um eine Soll-Temperatur des Vorformlings an der Blasformmaschine 113 zu erreichen. Dies kann beispielsweise der Fall sein, wenn die Regelung eines Betriebsparameters einer Komponente nicht ausreichend ist, um die Soll-Temperatur der Vorformlinge 110 an der Blasformmaschine 113 zu erreichen. So kann es beispielsweise vorgesehen sein, dass eine Heizleistung und eine Heizdauer der Heizvorrichtung 102 geregelt wird oder alternativ wenigstens zwei Betriebsparameter der Herstellungsmaschine 101. Alternativ kann es auch vorgesehen sein, dass ein Betriebsparameter von wenigstens zwei Komponenten der Behälterbehandlungsanlage 100 geregelt wird, um eine Soll-Temperatur des Vorformlings 110 an der Blasformmaschine 103 zu erreichen. Beispielsweise kann es vorgesehen sein, dass ein Betriebsparameter der Herstellungsmaschine 101 und ein Betriebsparameter der Heizvorrichtung 102 geregelt wird, um die Soll-Temperatur des Vorformlings 110 an der Blasformmaschine 113 zu erreichen. Dies kann zum Beispiel dann der Fall sein, wenn es durch Regelung eines oder mehrerer Betriebsparameter nur einer Komponente, beispielsweise der Blasformmaschine oder der Heizvorrichtung, nicht möglich ist, die Soll-Temperatur des Vorformlings 110 an der Blasformmaschine 103 zu erreichen. Dies kann entweder der Fall sein, wenn der Betriebsparameter einer der Komponenten bereits auf einen Maximalwert eingestellt ist und somit nicht höher geregelt werden kann oder wenn der Betriebsparameter außerhalb eines vorgegebenen Bereichs geregelt werden müsste. Die Regelung des Betriebsparameters außerhalb des vorgegeben Bereichs könnte beispielsweise negative Folgen für die Qualität des erzeugten Vorformlings haben. So könnte sich beispielsweise eine zu starke Erwärmen des Vorformlings durch die Heizvorrichtung 102 negativ auf die Qualität des aus dem Vorformling 110 erzeugten Behälters 111 auswirken.

Ferner kann es vorgesehen sein, dass die Regelung eines Betriebsparameters von mehr als zwei Komponenten der Behälterbehandlungsanlage 100 vorgesehen ist, um die Soll-Temperatur des Vorformlings 110 an der Blasformmaschine 103 zu erreichen. Beispielsweise kann es vorgesehen sein, dass ein Betriebsparameter der Herstellungsmaschine 101, ein Betriebsparameter der ersten Transportvorrichtung 114, ein Betriebsparameter der Heizvorrichtung 102 und ein Betriebsparameter der zweiten Transportvorrichtung 115 geregelt wird, um die Soll-Temperatur des Vorformlings 110 an der Blasformmaschine 113 zu erreichen. Dies kann beispielsweise der Fall sein, wenn die Regelung eines Betriebsparameters von zwei Komponenten der Behälterbehandlungsanlage 100 nicht ausreichend ist, um eine Soll-Temperatur des Vorformlings 110 an der Blasformmaschine 103 zu erreichen. Ist es beispielsweise in dem vorhergehend diskutierten Ausführungsbeispiel durch Regelung eines Betriebsparameters der Herstellungsmaschine 101 und durch Regelung eines Betriebsparameters der Heizvorrichtung 102 nicht möglich, die Soll-Temperatur des Vorformlings 110 an der Blasformmaschine 113 zu erreichen, so kann zusätzlich beispielsweise ein Betriebsparameter der ersten 114 und/oder der zweiten Transportvorrichtung 115 geregelt werden.

Stellt die Steuereinheit 104 beispielsweise fest, dass die Ist-Temperatur des Vorformlings 110 an dem Einlauf der Heizvorrichtung 112 zu niedrig oder zu hoch ist, um die Soll-Temperatur an der Blasformmaschine 113 zu erreichen, kann die Steuereinheit 104 basierend auf den in der Speichereinheit hinterlegten Daten den Betrieb der Herstellungsmaschine 101, der Heizvorrichtung 102 und/oder jeder anderen Komponente der Behälterbehandlungsanlage 100 derart regeln, dass die Temperatur des Vorformlings 110 erhöht oder erniedrigt wird und die Soll-Temperatur an der Blasformmaschine 113 erreicht wird. Wie oben bereits beschrieben, kann die Ist-Temperatur des Vorformlings 110 auch an jeder anderen Position zwischen Herstellungsmaschine 101 und Blasformmaschine 103 durch die Steuereinheit 104 bestimmt werden, beispielweise an dem Einlauf der Blasformmaschine 113, und die Steuereinheit 104 kann basierend auf der Ist-Temperatur und der in der Speichereinheit hinterlegten Daten eine entsprechende Regelung des Betriebs der Herstellungsmaschine 101, der Heizvorrichtung 102 und/oder jeder anderen Komponente der Behälterbehandlungsanlage 100 durchführen, um die Temperatur des Vorformlings 110 zu erniedrigen beziehungsweise zu erhöhen und die Soll-Temperatur an der Blasformmaschine 113 zu erreichen.

Optional kann es auch vorgesehen sein, wenn die Steuereinheit 104 feststellt, dass die Ist-Temperatur des Vorformlings 110 an dem Einlauf der Heizvorrichtung 102 (oder jeder anderen Position zwischen Herstellungsmaschine 101 und Blasformmaschine 103, wie beispielsweise an dem Einlauf der Blasformmaschine 113) zu niedrig oder zu hoch ist, um die Soll-Temperatur an der Blasformmaschine 113 zu erreichen, zunächst ein Betrieb der Herstellungsmaschine 101, der Heizvorrichtung 102 oder jeder anderen Komponente der Behälterbehandlungsanlage 100 durch die Steuereinheit 104 basierend auf den in der Speichereinheit hinterlegten Daten geregelt wird, um die Temperatur des Vorformlings 110 zu erhöhen oder zu erniedrigen. Stellt die Steuereinheit 104 anschließend fest, dass die Regelung des Betriebs der einen Komponente (beispielsweise der Herstellungsmaschine 101, der Heizvorrichtung 102 oder jeder anderen Komponente) nicht ausreichend ist, um die Soll-Temperatur des Vorformlings 110 an der Blasformmaschine 113 zu erreichen, kann die Steuereinheit 104 zusätzlich basierend auf den in der Speichereinheit hinterlegten Daten den Betrieb einer der anderen Komponenten der Behälterbehandlungsanlage 100 regeln, um die Soll-Temperatur des Vorformlings an der Blasformmaschine 113 zu erreichen. Dieser Prozess kann beliebig oft wiederholt werden.

In einer Ausführungsform kann die Steuereinheit 104 beispielsweise feststellen, dass die Ist-Temperatur des Vorformlings 110 an dem Einlauf der Blasformmaschine 113 zu niedrig oder zu hoch ist, und in einem ersten Schritt basierend auf den in der Speichereinheit hinterlegten Daten einen Betrieb der Herstellungsmaschine 101 regeln, zum Beispiel eine Herstellungswerkzeugtemperatur der Herstellungsmaschine erhöhen oder erniedrigen, um die Soll-Temperatur des Vorformlings 110 an der Blasformmaschine 113 zu erreichen. Stellt die Steuereinheit 104 in einem zweiten Schritt fest, dass die Ist-Temperatur des Vorformlings 110 an dem Einlauf der Blasformmaschine 113 immer noch zu niedrig oder zu hoch ist (das heißt unterhalb oder oberhalb der Soll-Temperatur liegt) kann die Steuereinheit 104 zusätzlich beispielsweise basierend auf den in der Speichereinheit hinterlegten Daten den Betrieb der Heizvorrichtung 102 regeln, zum Beispiel die Heizleistung der Heizvorrichtung 102 erhöhen oder erniedrigen, so dass die Soll-Temperatur an dem Einlauf der Blasformmaschine 113 erreicht werden kann.

## Patentansprüche

1. Behälterbehandlungsanlage (100) zum Regeln einer Temperatur eines Vorformlings (110), wobei die Behälterbehandlungsanlage (100) eine Herstellungsmaschine (101) zum Herstellen eines Vorformlings (110), insbesondere eine Spritzgussmaschine, eine stromab der Herstellungsmaschine (101) angeordnete Heizvorrichtung (102), eine stromab der Heizvorrichtung (102) angeordnete Blasformmaschine (103) und eine Steuereinheit (104) umfasst, wobei die Steuereinheit (104) ausgebildet ist, basierend auf einer Ist-Temperatur des Vorformlings (110) an einer Position (112) stromauf der Blasformmaschine (103) einen Betriebsparameter wenigstens einer Komponente der Behälterbehandlungsanlage (100) zu regeln, um eine Soll-Temperatur des Vorformlings (110) an der Blasformmaschine (113) zu erreichen, wobei die wenigstens eine Komponente eine zwischen der Herstellungsmaschine (101) und der Heizvorrichtung (102) angeordnete erste Transportvorrichtung (114) und/oder eine zwischen der Heizvorrichtung (102) und der Blasformmaschine (103) angeordnete zweite Transportvorrichtung (115) umfasst.

2. Behälterbehandlungsanlage nach Anspruch 1, wobei die wenigstens eine Komponente die Heizvorrichtung (102) umfasst und der Betriebsparamater eine Heizleistung, ein Heizprofil und/oder eine Heizdauer der Heizvorrichtung ist.

3. Behälterbehandlungsanlage nach Anspruch 1 bis 2, wobei die wenigstens eine Komponente die Herstellungsmaschine (101) zum Herstellen des Vorformlings (110) umfasst.

4. Behälterbehandlungsanlage nach Anspruch 3, wobei der Betriebsparameter eine Zykluszeit, eine Einspritzdauer, eine Lock to Lock Zeit, eine Herstellungswerkzeugtemperatur, eine Schmelztemperatur, eine Nachkühltemperatur der Herstellungsmaschine (101) und/oder eine Zusammensetzung eines Materials zum Herstellen der Vorformlinge in der Herstellungsmaschine (101) ist.

5. Behälterbehandlungsanlage nach einem der Ansprüche 1 bis 4, wobei die Steuereinheit (104) ausgebildet ist, einen Betriebsparameter der Heizvorrichtung (102) und einen Betriebsparameter der Herstellungsmaschine (101) zu regeln, wenn die Ist-Temperatur unter- oder oberhalb eines Schwellenwertes liegt.

6. Behälterbehandlungsanlage nach Anspruch 1, wobei der Betriebsparameter eine Transportgeschwindigkeit, eine an der ersten (114) und/oder zweiten Transportvorrichtung (115) vorherrschende Umgebungstemperatur und/oder eine Anzahl von Vorformlingen ist, welche mit der ersten (114) und/oder zweiten Transportvorrichtung (115) innerhalb eines bestimmten Zeitintervalls transportiert werden.

7. Verfahren zur Regelung einer Temperatur eines Vorformlings (110) in einer Behälterbehandlungsanlage (100), wobei die Behälterbehandlungsanlage (100) eine Herstellungsmaschine (101) zum Herstellen des Vorformlings (110), insbesondere ein Spritzgussmaschine, eine stromab der Herstellungsmaschine (101) angeordnete Heizvorrichtung (102), eine stromab der Heizvorrichtung (102) angeordnete Blasformmaschine (103) und eine Steuereinheit (104) umfasst, wobei durch die Steuereinheit (104) basierend auf einer Ist-Temperatur des Vorformlings (110) an einer Position (112) stromauf der Blasformmaschine (103) ein Betriebsparameter wenigstens einer Komponente der Behälterbehandlungsanlage (100) geregelt wird, so dass eine Soll-Temperatur des Vorformlings (110) an der Blasformmaschine (113) erreicht wird, wobei die wenigstens eine Komponente eine zwischen der Herstellungsmaschine (101) und der Heizvorrichtung (102) angeordnete erste Transportvorrichtung (114) und/oder eine zwischen der Heizvorrichtung (102) und der Blasformmaschine (103) angeordnete zweite Transportvorrichtung (115) umfasst.

8. Verfahren nach Anspruch 7, wobei die wenigstens eine Komponente die Heizvorrichtung (102) umfasst und der Betriebsparamater eine Heizleistung, ein Heizprofil und/oder eine Heizdauer der Heizvorrichtung ist.

9. Verfahren nach einem der Ansprüche 7 bis 8, wobei die wenigstens eine Komponente die Herstellungsmaschine (101) zum Herstellen des Vorformlings umfasst.

10. Verfahren nach Anspruch 9, wobei der Betriebsparameter eine Zykluszeit, eine Einspritzdauer, eine Lock to Lock Zeit, eine Herstellungswerkzeugtemperatur, eine Schmelztemperatur, eine Nachkühltemperatur der Herstellungsmaschine (101) und/oder eine Zusammensetzung eines Materials zum Herstellen der Vorformlinge in der Herstellungsmaschine (101) ist.

11. Verfahren nach einem der Ansprüche 7 bis 10, wobei ein Betriebsparameter der Heizvorrichtung (102) und ein Betriebsparameter der Herstellungsmaschine (101) durch die Steuereinheit (104) geregelt wird, wenn die Ist-Temperatur unter- oder oberhalb eines Schwellenwertes liegt.

12. Verfahren nach Anspruch 7, wobei der Betriebsparameter eine Transportgeschwindigkeit der ersten (114) und/oder zweiten Transportvorrichtung (115), eine an der ersten (114) und/oder zweiten Transportvorrichtung (115) vorherrschende Umgebungstemperatur und/oder eine Anzahl von Vorformlingen (110) ist, welche mit der ersten (114) und/oder zweiten Transportvorrichtung (115) transportiert werden.

13. Verfahren nach einem der Ansprüche 7 bis 12, wobei es sich bei der Ist- und/oder der Soll-temperatur um eine Ist- und/oder Solltemperaturverteilung des Vorformlings (110) handelt.

## Claims

1. A container treatment system (100) for controlling a temperature of a preform (110), wherein the container treatment system (100) comprises a manufacturing machine (101) for producing a preform (110), in particular an injection-molding machine, a heating device (102) arranged downstream of the manufacturing machine (101), a blow-molding machine (103) arranged downstream of the heating device (102), and a control unit (104), wherein the control unit (104) is configured to control, based on an actual temperature of the preform (110) at a position (112) upstream of the blow-molding machine (103), an operating parameter of at least one component of the container treatment system (100) in order to achieve a setpoint temperature of the preform (110) at the blow-molding machine (113), wherein the at least one component comprises a first transport device (114) arranged between the manufacturing machine (101) and the heating device (102) and/or a second transport device (115) arranged between the heating device (102) and the blow-molding machine (103).

2. The container treatment system according to claim 1, wherein the at least one component comprises the heating device (102) and the operating parameter is a heating power, a heating profile and/or a heating duration of the heating device.

3. The container treatment system according to claim 1 to 2, wherein the at least one component comprises the manufacturing machine (101) for producing the preform (110).

4. The container treatment system according to claim 3, wherein the operating parameter is a cycle time, an injection duration, a lock-to-lock time, a manufacturing-tool temperature, a melt temperature, a post-cooling temperature of the manufacturing machine (101) and/or a composition of a material for producing the preforms in the manufacturing machine (101).

5. The container treatment system according to any one of claims 1 to 4, wherein the control unit (104) is configured to control an operating parameter of the heating device (102) and an operating parameter of the manufacturing machine (101) when the actual temperature is below or above a threshold value.

6. The container treatment system according to claim 1, wherein the operating parameter is a transport speed, an ambient temperature prevailing at the first (114) and/or second transport device (115) and/or a number of preforms which are transported by the first (114) and/or second transport device (115) within a certain time interval.

7. A method for controlling a temperature of a preform (110) in a container treatment system (100), wherein the container treatment system (100) comprises a manufacturing machine (101) for producing the preform (110), in particular a injection-molding machine, a heating device (102) arranged downstream of the manufacturing machine (101), a blow-molding machine (103) arranged downstream of the heating device (102), and a control unit (104), wherein an operating parameter of at least one component of the container treatment system (100) is controlled by the control unit (104) based on an actual temperature of the preform (110) at a position (112) upstream of the blow-molding machine (103), such that a setpoint temperature of the preform (110) at the blow-molding machine (113) is achieved, wherein the at least one component comprises a first transport device (114) arranged between the manufacturing machine (101) and the heating device (102) and/or a second transport device (115) arranged between the heating device (102) and the blow-molding machine (103).

8. The method according to claim 7, wherein the at least one component comprises the heating device (102) and the operating parameter is a heating power, a heating profile and/or a heating duration of the heating device.

9. The method according to any one of claims 7 to 8, wherein the at least one component comprises the manufacturing machine (101) for producing the preform.

10. The method according to claim 9, wherein the operating parameter is a cycle time, an injection duration, a lock-to-lock time, a manufacturing-tool temperature, a melt temperature, a post-cooling temperature of the manufacturing machine (101) and/or a composition of a material for producing the preforms in the manufacturing machine (101).

11. The method according to any one of claims 7 to 10, wherein an operating parameter of the heating device (102) and an operating parameter of the manufacturing machine (101) are controlled by the control unit (104) when the actual temperature is below or above a threshold value.

12. The method according to claim 7, wherein the operating parameter is a transport speed of the first (114) and/or second transport device (115), an ambient temperature prevailing at the first (114) and/or second transport device (115) and/or a number of preforms (110) which are transported by the first (114) and/or second transport device (115).

13. The method according to any one of claims 7 to 12, wherein the actual and/or setpoint temperature is an actual and/or setpoint temperature distribution of the preform (110).

## Revendications

1. Installation de traitement de récipients (100) pour réguler une température d'une préforme (110), dans laquelle l'installation de traitement de récipients (100) comprend une machine de fabrication (101) pour fabriquer une préforme (110), en particulier une machine de moulage par injection, un dispositif de chauffage (102) disposé en aval de la machine de fabrication (101), une machine de moulage par soufflage (103) disposée en aval du dispositif de chauffage (102) et une unité de commande (104), dans laquelle l'unité de commande (104) est configurée pour réguler, sur la base d'une température réelle de la préforme (110) à une position (112) en amont de la machine de moulage par soufflage (103), un paramètre de fonctionnement d'au moins un composant de l'installation de traitement de récipients (100), afin d'atteindre une température de consigne de la préforme (110) au niveau de la machine de moulage par soufflage (113), dans laquelle ledit au moins un composant comprend un premier dispositif de transport (114) disposé entre la machine de fabrication (101) et le dispositif de chauffage (102) et/ou un deuxième dispositif de transport (115) disposé entre le dispositif de chauffage (102) et la machine de moulage par soufflage (103).

2. Installation de traitement de récipients selon la revendication 1, dans laquelle ledit au moins un composant comprend le dispositif de chauffage (102) et le paramètre de fonctionnement est une puissance de chauffage, un profil de chauffage et/ou une durée de chauffage du dispositif de chauffage.

3. Installation de traitement de récipients selon la revendication 1 à 2, dans laquelle ledit au moins un composant comprend la machine de fabrication (101) pour fabriquer la préforme (110).

4. Installation de traitement de récipients selon la revendication 3, dans laquelle le paramètre de fonctionnement est un temps de cycle, une durée d'injection, un temps « lock-to-lock », une température de l'outil de fabrication, une température de la matière fondue, une température de post-refroidissement de la machine de fabrication (101) et/ou une composition d'un matériau pour fabriquer les préformes dans la machine de fabrication (101).

5. Installation de traitement de récipients selon l'une quelconque des revendications 1 à 4, dans laquelle l'unité de commande (104) est configurée pour réguler un paramètre de fonctionnement du dispositif de chauffage (102) et un paramètre de fonctionnement de la machine de fabrication (101) lorsque la température réelle est inférieure ou supérieure à une valeur seuil.

6. Installation de traitement de récipients selon la revendication 1, dans laquelle le paramètre de fonctionnement est une vitesse de transport, une température ambiante régnant au niveau du premier (114) et/ou du deuxième dispositif de transport (115) et/ou un nombre de préformes qui sont transportées par le premier (114) et/ou le deuxième dispositif de transport (115) au cours d'un intervalle de temps déterminé.

7. Procédé de régulation d'une température d'une préforme (110) dans une installation de traitement de récipients (100), dans lequel l'installation de traitement de récipients (100) comprend une machine de fabrication (101) pour fabriquer la préforme (110), en particulier un machine de moulage par injection, un dispositif de chauffage (102) disposé en aval de la machine de fabrication (101), une machine de moulage par soufflage (103) disposée en aval du dispositif de chauffage (102) et une unité de commande (104), dans lequel un paramètre de fonctionnement d'au moins un composant de l'installation de traitement de récipients (100) est régulé par l'unité de commande (104) sur la base d'une température réelle de la préforme (110) à une position (112) en amont de la machine de moulage par soufflage (103), de telle sorte qu'une température de consigne de la préforme (110) soit atteinte au niveau de la machine de moulage par soufflage (113), dans lequel ledit au moins un composant comprend un premier dispositif de transport (114) disposé entre la machine de fabrication (101) et le dispositif de chauffage (102) et/ou un deuxième dispositif de transport (115) disposé entre le dispositif de chauffage (102) et la machine de moulage par soufflage (103).

8. Procédé selon la revendication 7, dans lequel ledit au moins un composant comprend le dispositif de chauffage (102) et le paramètre de fonctionnement est une puissance de chauffage, un profil de chauffage et/ou une durée de chauffage du dispositif de chauffage.

9. Procédé selon l'une quelconque des revendications 7 à 8, dans lequel ledit au moins un composant comprend la machine de fabrication (101) pour fabriquer la préforme.

10. Procédé selon la revendication 9, dans lequel le paramètre de fonctionnement est un temps de cycle, une durée d'injection, un temps « lock-to-lock », une température de l'outil de fabrication, une température de la matière fondue, une température de post-refroidissement de la machine de fabrication (101) et/ou une composition d'un matériau pour fabriquer les préformes dans la machine de fabrication (101).

11. Procédé selon l'une quelconque des revendications 7 à 10, dans lequel un paramètre de fonctionnement du dispositif de chauffage (102) et un paramètre de fonctionnement de la machine de fabrication (101) sont régulés par l'unité de commande (104) lorsque la température réelle est inférieure ou supérieure à une valeur seuil.

12. Procédé selon la revendication 7, dans lequel le paramètre de fonctionnement est une vitesse de transport du premier (114) et/ou du deuxième dispositif de transport (115), une température ambiante régnant au niveau du premier (114) et/ou du deuxième dispositif de transport (115) et/ou un nombre de préformes (110) qui sont transportées par le premier (114) et/ou le deuxième dispositif de transport (115).

13. Procédé selon l'une quelconque des revendications 7 à 12, dans lequel la température réelle et/ou la température de consigne est une distribution de température réelle et/ou de température de consigne de la préforme (110).
